# EUROPÄISCHE PATENTSCHRIFT

(11) **EP 3 697 967 B1**
(45) Veröffentlichungstag und Bekanntmachung des Hinweises auf die Patenterteilung: **09.10.2024**
(21) Anmeldenummer: 18740578.2
(22) Anmeldetag: 12.07.2018
(51) Int. Cl.: E01D 11/04, E01D 19/06, B63B 1/20, E01D 19/16

(54) **SPANNGLIEDSCHUTZVORRICHTUNG**
TENSION MEMBER PROTECTION DEVICE
DISPOSITIF DE PROTECTION D'UN ÉLÉMENT DE TENSION

(30) Priorität: 16.10.2017 DE 102017218479
(43) Veröffentlichungstag der Anmeldung: 26.08.2020
(73) Patentinhaber: Dywidag-Systems International GmbH, 80796 München (DE)
(72) Erfinder: BRAND, Werner, 85356 Freising (DE)
(74) Vertreter: Weickmann & Weickmann PartmbB
(86) Internationale Anmeldenummer: PCT/EP2018/068950
(87) Internationale Veröffentlichungsnummer: WO 2019/076499

(56) Entgegenhaltungen:
- EP-A1- 0 497 460
- EP-A1- 0 497 460
- EP-A2- 0 787 938
- EP-A2- 0 787 938
- FR-A- 1 482 629
- FR-A- 1 482 629
- FR-A1- 2 523 564
- FR-A1- 2 523 564
- US-A1- 2012 058 338
- US-A1- 2012 058 338

## Beschreibung

Die Erfindung betrifft eine Spanngliedschutzvorrichtung gemäß dem Oberbegriff des Anspruchs 1.

Derartige Spanngliedschutzvorrichtungen sind im Stand der Technik bekannt. Sie dienen ganz allgemein dazu, das Spannglied vor Hitze und/oder Feuer und/oder Aufprall und/oder mechanischer Beschädigung und/oder anderen das Spannglied möglicherweise in seiner Struktur gefährdenden Ereignissen zu schützen, seien sie natürlichen oder menschlichen Ursprungs.

Die Ausbildung aus zwei oder mehr in Umfangsrichtung um das Spannglied anordenbaren Schalenelementen ermöglicht dabei zum einen die Nachrüstung der Spanngliedschutzvorrichtungen an Spanngliedern bereits bestehender Bauwerke, beispielsweise Schrägseilbrücken, und zum anderen das zeitweise Wiederabnehmen der Spanngliedschutzvorrichtungen von den Spanngliedern, beispielsweise zum Zwecke der Wartung der Spannglieder.

Aus der US 2011/0302856 A1 ist eine gattungsgemäße Spanngliedschutzvorrichtung bekannt, zu deren Montage am Spannglied zunächst eine Mehrzahl von Klammern befestigt werden muss, die mit Scharnieren und mit diesen Scharnieren gelenkig verbundenen Flügelblechen ausgebildet sind. An diesen Flügelblechen werden dann die das Spannglied schützenden Schalenelemente befestigt. Nachteilig ist dabei, dass die Umfangsabschnitte, in denen die Scharniere angeordnet sind, zur Ermöglichung der Schwenkbarkeit der Schalenelemente mit reduzierter Wandstärke ausgebildet sind und somit Schwachstellen der gattungsgemäßen Spanngliedschutzvorrichtung bilden.

Aus der EP 0 497 460 A1, welche als nächstliegender Stand der Technik erachtet wird, ist eine Spannglied-Schutzvorrichtung gemäß dem Oberbegriff des Anspruchs 1 bekannt, welche dazu ausgelegt und bestimmt ist, ein zwischen zwei Abschnitten eines Bauwerks angeordnetes Spannglied zu schützen, wobei die Spannglied-Schutzvorrichtung zwei Schalenelemente umfasst, welche zum Schutz des Spannglieds derart aneinander angeordnet werden können, dass Verbindungsbuchsen eines Schalenelements mit Verbindungsbuchsen des anderen Schalenelements ausgerichtet werden, so dass die Schalenelemente durch ein stabförmiges Verbindungselement miteinander verbunden werden können. Ferner sei auf die Dokumente FR 1 482 629 A, EP 0 787 938 A2, FR 2 523 564 A1 und US 2012/058338 A1 hingewiesen.

Es ist daher Aufgabe der Erfindung, eine verbesserte Spanngliedschutzvorrichtung bereitzustellen.

Diese Aufgabe wird erfindungsgemäß durch eine Spanngliedschutzvorrichtung gemäß Anspruch 1 gelöst.

Obgleich die erfindungsgemäßen Verbindungsmittel aufgrund des Zusammenwirkens der Verbindungsbuchsen und des stabförmigen Elements scharnierartig ausgebildet zu sein scheinen, ermöglichen sie doch kein Verschwenken der beiden betrachteten Schalenelemente relativ zueinander. Dies wird dadurch verhindert, dass das stabförmige Element erst dann durch die Durchgangslöcher der ineinandergreifenden Verbindungsbuchsen hindurchgeführt werden kann, wenn die beiden Schalenelemente mit ihren Anlageflächen aneinander anliegen. Durch diese Konstruktion kann die Spanngliedschutzvorrichtung auch in dem Umfangsabschnitt, in dem die Verbindungsmittel angeordnet sind, die gleiche radiale Erstreckung aufweisen wie in allen anderen Umfangsabschnitten. Die erfindungsgemäße Spanngliedschutzvorrichtung verfügt daher über keine Schwachstellen.

Um das Eindringen von Feuchtigkeit in die Stoßstelle zwischen den beiden Schalenelementen verhindern zu können, wird vorgeschlagen, dass ein Abdeckblech vorgesehen ist, welches die Stoßstelle zwischen den beiden aneinander anliegenden Schalenelementen überdeckt und an wenigstens einem der beiden Schalenelemente befestigt ist.

Um verschleiern zu können, an welcher Umfangsposition sich die Stoßstelle tatsächlich befindet, kann ferner vorgesehen sein, dass wenigstens ein weiteres Abdeckblech vorgesehen ist, welches an der äußeren Oberfläche eines der Schalenelemente befestigt ist.

Mit dem Ziel einer effektiven Verbindung der beiden Schalenelemente wird in Weiterbildung der Erfindung vorgeschlagen, dass die Länge des stabförmigen Elements im Wesentlichen gleich der Länge der Spanngliedschutzvorrichtung ist. Dabei kann ein unerwünschtes, selbsttätiges Herausfallen des stabförmigen Elements aus dem im montierten Zustand unteren Ende der Spanngliedschutzvorrichtung in einfacher Weise durch ein Bodenblech der Spanngliedschutzvorrichtung verhindert werden. Ferner ist es vorteilhaft, das im montierten Zustand obere Ende der Spanngliedschutzvorrichtung nach dem Einführen des stabförmigen Elements mittels eines Deckelblechs zu verschließen, um den Zugriff auf das stabförmige Element zumindest erschweren, wenn nicht gar verhindern zu können.

Sollte eine Mehrzahl erfindungsgemäßer Spanngliedschutzvorrichtungen in Längsrichtung unmittelbar aufeinanderfolgend an einem Spannglied angeordnet sein, so kann das stabförmige Element auch eine Länge aufweisen, die im Wesentlichen gleich der Länge der Gesamtanordnung der Spanngliedschutzvorrichtungen ist.

Das effektive Zusammenwirken von Verbindungsbuchsen und stabförmigem Element kann dadurch erzielt werden, dass die dem einen Schalenelement zugeordneten Verbindungsbuchsen und die dem jeweils anderen Schalenelement zugeordneten Verbindungsbuchsen in alternierender Reihenfolge ineinandergreifen. Dabei ist es ferner vorteilhaft, wenn die Länge der den beiden Schalenelementen zugeordneten Verbindungsbuchsen gleich bemessen ist. Lediglich die in Längserstreckungsrichtung des Spannglieds endständigen Verbindungsbuchsen können dabei eine abweichende Länge aufweisen.

Zur Vereinfachung der Herstellung der Schalenelemente wird in Weiterbildung der Erfindung vorgeschlagen, dass die Verbindungsbuchsen einen rechteckigen, vorzugsweise quadratischen, Querschnitt aufweisen. In diesem Fall können die Verbindungsbuchsen nämlich als gesonderte Elemente bereitgestellt werden, welche nach Anlage einer ihrer Rechtecks- bzw. Quadratseiten gegen das jeweilige Schalenelement bzw. das Gehäuse des jeweiligen Schalenelements mit diesem verbunden werden können, beispielsweise durch Schweißen, Löten, Kleben oder eine andere geeignete Verbindungstechnik.

Gleichwohl kann vorgesehen sein, dass das stabförmige Element einen kreisförmigen Querschnitt aufweist. Derartige Rundstäbe sind kostengünstig erhältlich.

Unabhängig von der jeweiligen Querschnittsgestalt der Verbindungsbuchsen und des stabförmigen Elements ist es vorteilhaft, wenn der Querschnitt der Verbindungsbuchsen Innenabmessungen aufweist, die größer sind als die Außenabmessungen des Querschnitts des stabförmigen Elements. Beispielsweise ist es vorteilhaft, wenn der Durchmesser des stabförmigen Elements mit kreisförmigem Querschnitt einen kleineren Wert aufweist als die Seitenlänge einer quadratisch ausgebildeten Verbindungsbuchse. Dies ermöglicht es, das stabförmige Element auch dann in die ineinandergreifenden Verbindungsbuchsen einführen zu können, wenn deren Durchgangsöffnungen nicht vollständig überlappen.

Um die Verbindungsmittel effektiv vor äußeren Einflüssen schützen zu können, wird in Weiterbildung nicht erfindungsgemäß vorgeschlagen, dass die Verbindungsbuchsen in einem den Hohlraum benachbarten, vorzugsweise an den Hohlraum unmittelbar angrenzenden, radialen Abschnitt der beiden Schalenelemente angeordnet sind. Auf diese Weise kann sich die eigentliche Schutzvorrichtung radial außerhalb der Verbindungsmittel erstrecken und somit nicht nur das Spannglied, sondern auch die Verbindungsmittel schützen.

Erfindungsgemäß können die Verbindungsbuchsen in dem Hohlraum angeordnet sein. Vorzugsweise können die Verbindungsmittel mit einem zwischengeschalteten Steg an einer Innenumfangsfläche der Schalenelemente angeordnet sein oder können unmittelbar an die Innenumfangsfläche der Schalenelemente angrenzend angeordnet sein. Durch diese Anordnung werden die Verbindungsmittel noch effektiver vor äußeren Einflüssen geschützt.

In einer weiteren Ausführungsform der Erfindung kann in den Anlageflächen von wenigstens zwei Schalenelementen, welche in dem den Hohlraum bildenden Zustand aneinander anliegen, eine Kopplungsvorrichtung angeordnet sein, welche die Anlageflächen der wenigstens zwei Schalenelemente aneinander koppelt. Hierdurch können Scherspannungen zwischen den Anlageflächen abgetragen werden.

Ferner wird in Weiterbildung der Erfindung vorgeschlagen, dass wenigstens ein Schalenelement ein Gehäuse aufweist, vorzugsweise alle Schalenelemente ein Gehäuse aufweisen, dessen Innenraum die Schutzvorrichtung aufnimmt. Dabei kann das Gehäuse beispielsweise aus Stahlblech gefertigt sein.

Die Erfindung wird im Folgenden anhand der beigefügten Zeichnungen an Ausführungsbeispielen näher erläutert werden. Es stellt dar:
- FIG. 1: eine Längsansicht einer nicht erfindungsgemäßen Spanngliedschutzvorrichtung,
- FIG. 2: eine Explosionsansicht einer nicht erfindungsgemäßen Spanngliedschutzvorrichtung,
- FIG. 3: eine Ansicht einer nicht erfindungsgemäßen aufgeklappten Spanngliedschutzvorrichtung,
- FIG. 4A: einen Schnitt durch die nicht erfindungsgemäße Spanngliedschutzvorrichtung,
- FIG. 4B: einen Schnitt durch die nicht erfindungsgemäße Spanngliedschutzvorrichtung, in dem die beiden Schalenelemente mit einem räumlichen Abstand an den Anlageflächen dargestellt sind,
- FIG. 5: eine zweite, nicht erfindungsgemäße, Ausführungsform der Spanngliedschutzvorrichtung,
- FIG. 6A: einen Schnitt durch eine dritte erfindungsgemäße Ausführungsform der Spanngliedschutzvorrichtung, und
- FIG. 6B: einen Schnitt durch die dritte Ausführungsform der Spanngliedschutzvorrichtung, in dem die beiden Schalenelemente mit einem räumlichen Abstand an den Anlageflächen dargestellt sind.

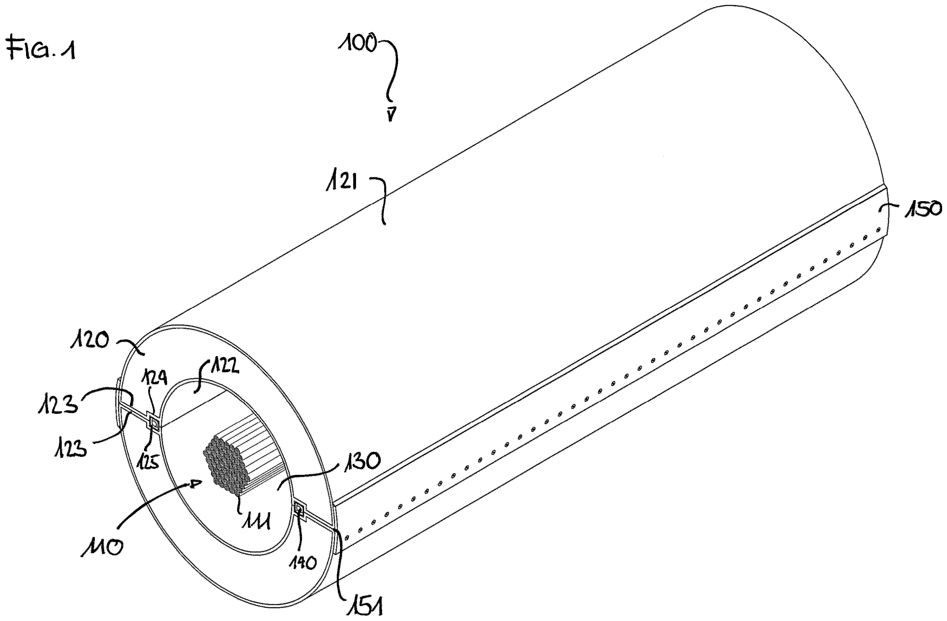

In FIG. 1 ist eine Spanngliedschutzvorrichtung allgemein mit der Ziffer 100 bezeichnet. Die Spanngliedschutzvorrichtung 100 ist dazu ausgelegt und bestimmt, ein zwischen zwei Abschnitten eines Bauwerks angeordnetes Spannglied 110 zu schützen. Dies kann insbesondere ein Schutz vor Hitze, vor einem Aufprall oder ganz allgemein vor mechanischer Beschädigung sein.

Das Spannglied 110 besteht aus mehreren Litzen 111 und kann beispielsweise dazu dienen, die Lasten der Fahrbahnplatten von Schrägseilbrücken an den/die Pylon(e) weiter zu geben. Es ist jedoch auch jede andere Funktion/Bauwerk denkbar, für die/in der Spannglieder eingesetzt werden können.

Die Spanngliedschutzvorrichtung 100 umfasst des Weiteren zwei oder mehr Schalenelemente 120, welche um das Spannglied 110 angeordnet sind und so einen Kreiszylinder mit einem innenliegendem Hohlraum 130 bilden. Der durch die Schalenelemente 120 gebildete Hohlraum 130 des Kreiszylinders dient zur Aufnahme des Spannglieds 110. Zur Bildung dieses Hohlraums 130 liegen die Anlageflächen 123 der Schalenelemente 120 aneinander an.

Die Schalenelemente 120 sind aus einem metallischen Material gebildet, können aber auch aus jedem anderen Material hergestellt sein.

Wie aus FIG. 1 ersichtlich, kann die Spanngliedschutzvorrichtung 100 zwei Schalenelemente 120 umfassen. In diesem Fall kann jedes Schalenelement 120 so ausgebildet sein, dass es das Spannglied 110 in einem Umfang von 180° umgibt. In diesem Fall sind beide Schalenelemente 120 in ihrem Querschnitt gleich groß ausgebildet. Alternativ können beide Schalenelemente 120 auch in ihrem Querschnitt unterschiedlich groß ausgebildet sein. Wenn das Spannglied 110 von mehr als zwei Schalenelementen 120 umgeben sein sollte, können diese entweder als gleich große Schalenelemente 120 ausgebildet sein oder können verschieden groß in ihrem Querschnitt ausgebildet sein. Es versteht sich von selbst, dass die Schalenelemente 120 in jedem Fall gleich lang ausgebildet sein sollten, um ein Freiliegen des Spannglieds 110 zu verhindern.

Die Schalenelemente 120 können als Vollelemente oder als Hohlelemente ausgebildet sein. In jedem Fall weisen die Schalenelemente 120 jeweils eine äußere Oberfläche/ Außenumfangfläche 121, eine Innenumfangfläche 122 und zwei Anlageflächen 123 auf.

Des Weiteren umfassen die Schalenelemente 120 an den Anlageflächen 123 eine Einbuchtung 124, die sich entlang des gesamten Schalenelements 120 erstreckt und die, nach der Zusammenfügung der Schalenelemente 120 zu dem Kreiszylinder, zur Aufnahme eines stabförmigen Elementes 140 dient.

Die Einbuchtung 124 kann insbesondere quadratisch oder rechteckig, zur Aufnahme eines im Querschnitt quadratischen, rechteckigen oder runden stabförmigen Elements 140 ausgebildet sein. Die Einbuchtung kann jedoch auch rund, zur Aufnahme eines runden oder quadratischen stabförmigen Elements, oder in jeder weiteren Form ausgebildet sein. In dem Fall, in dem die Einbuchtung 124 quadratisch ausgebildet ist, wie es in den FIG. 1 bis 4 der Fall ist, weist die Einbuchtung 124 eine Fläche 124a auf, welche parallel zu der Anlagefläche 123 verläuft, und zwei Seitenflächen 124b, wobei die Seitenfläche 124b, die näher zu dem Hohlraum 130 gelegen ist, integral mit der Innenumfangfläche 122 des Schalenelements 120 ausgebildet sein kann.

Jedes Schalenelement 120 weist jeweils eine Einbuchtung 124 an jeder Anlagefläche 123 auf. Es können jedoch auch mehr Einbuchtungen 124 an jeder der Anlageflächen 123 oder an einer oder mehreren der Anzahl von Anlageflächen 123 vorhanden sein. Die Einbuchtung kann bevorzugt an der Seite der Anlagefläche 123 gelegen sein, welche an die Innenumfangfläche des Schalenelements 120 angrenzt. Die Einbuchtung 124 kann jedoch an jeder anderen beliebigen Position der Anlagefläche 123 gelegen sein.

Sobald die Schalenelemente 120 zusammengefügt werden und die Anlageflächen 123 jeweils aneinander anliegen, ergeben die Einbuchtungen von zwei aneinander angrenzenden Anlageflächen 123 einen Hohlraum 125 in Form eines Quadrats/Rechtecks, wenn sie in der entsprechenden Form ausgebildet sind, oder, wenn diese beispielsweise kreisrund ausgebildet sind, eines Kreises/Kreiszylinders.

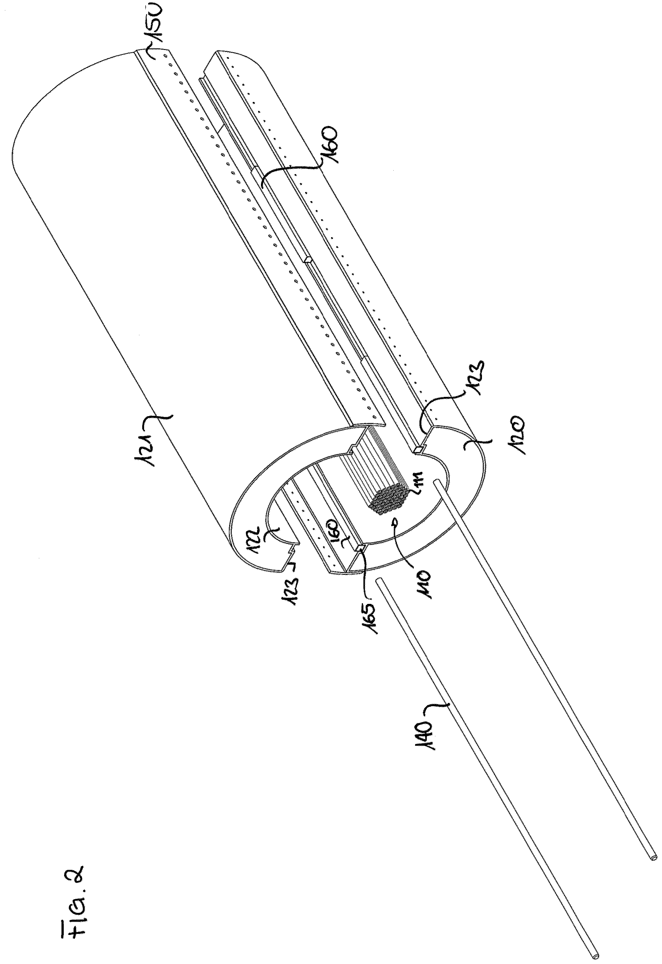

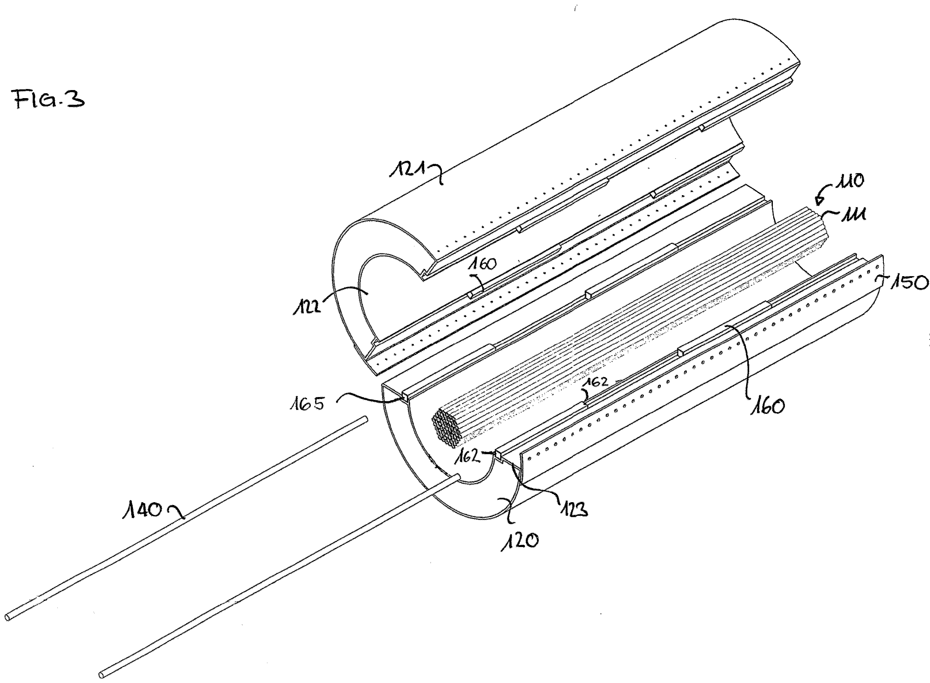

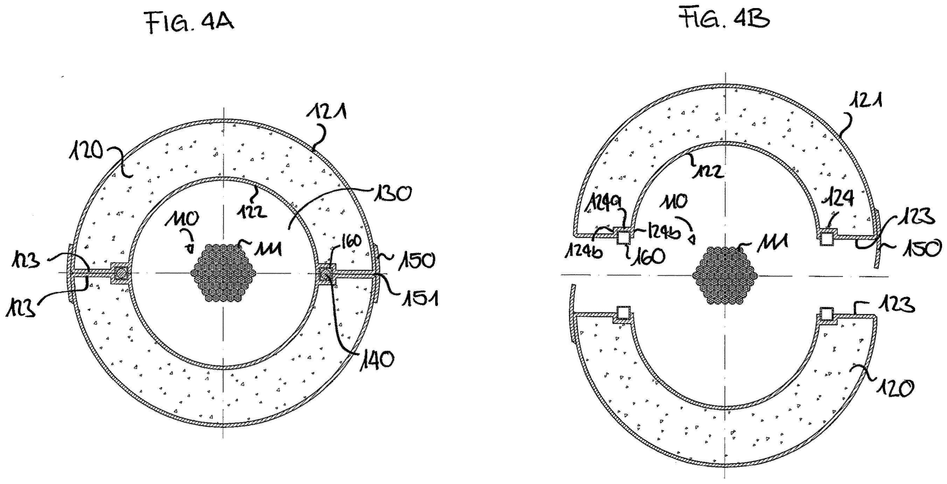

Die durch die Einbuchtungen 124 ausgebildeten Hohlräume 125 dienen, wie bereits bezeichnet, zur Aufnahme eines stabförmigen Elementes 140. Ein solches ist in FIG. 2 und 3 in einer Explosionsansicht sowie in FIG. 4A und FIG. 4B in einem in dem Hohlraum 125 aufgenommenen Zustand dargestellt. Das stabförmige Element 140 kann aus einem metallischen Material ausgebildet sein, kann aber auch aus jedem anderen Material bestehen. Es kann glatt oder mit Rippen oder Ähnlichem versehen ausgebildet sein. Des Weiteren kann das stabförmige Element 140 kürzer als die Schalenelemente 120 ausgebildet sein. Für den Fall, dass mehrere Spanngliedschutzvorrichtungen 100 in einer Reihe auf das Spannglied 110 aufgebracht werden, kann das stabförmige Element 140 auch länger als die einzelnen Schalenelemente 120 einer Spanngliedschutzvorrichtung 100 sein und kann auch ebenso lang wie die Länge der Gesamtanordnung der Spanngliedschutzvorrichtung 100 sein.

Darüber hinaus umfasst die Spanngliedschutzvorrichtung 100 ein Abdeckblech 150, welches die Stoßstellen 151 zwischen den beiden aneinander anliegenden Anlageflächen 123 der Schalenelemente 120 überdeckt und an wenigstens einem der beiden Schalenelemente 120 befestigt ist. Um verschleiern zu können, an welcher Umfangsposition sich die Stoßstellen der Schalenelemente 120 tatsächlich befinden, kann ferner vorgesehen sei, dass wenigstens ein weiteres Abdeckblech 150 vorgesehen ist, welches an einer Außenumfangsfläche 121 eines der Schalenelemente 120 befestigt ist. Die Abdeckbleche 150 können mittels Bolzen an der Außenumfangfläche 121 des Schalenelements 120 befestigt sein. Jedoch kann jedes andere Befestigungsmittel gewählt werden, welche hierbei zweckdienlich ist.

Die Abdeckbleche 150 können aus einem metallischen Material gefertigt sein, können jedoch auch aus jedem anderen Material gebildet sein. Ferner können die Abdeckbleche 150 gebogen ausgebildet sein und zwar bevorzugt entsprechend der Biegung der Außenumfangsfläche 121.

Ferner umfasst die Spanngliedschutzvorrichtung 100 Verbindungsbuchsen 160. Diese sind Verbindungsmittel zum Verbinden der Schalenelemente 120. Jede Verbindungsbuchse ist hohl ausgebildet und umfasst ein Durchgangsloch 165 sowie Stirnflächen 162. Die Verbindungsbuchsen 160 sind an den Schalenelementen 120 in den durch die Einbuchtungen 124 ausgebildeten Hohlräumen 125 angeordnet. Bevorzugt weisen die Verbindungsbuchsen 160 daher einen zu den Hohlräumen 125 komplementären Querschnitt auf. Sind die Hohlräume 125 beispielsweise in Form eines Quadrats ausgebildet, weisen die Verbindungsbuchsen 160 entsprechend einen quadratischen Querschnitt auf.

Unabhängig von der jeweiligen Querschnittsgestalt der Verbindungsbuchsen 160 und des stabförmigen Elements 140, weist der Querschnitt des Durchgangslochs 165 der Verbindungsbuchsen 160 Innenabmessungen auf, welche größer sind als die (größten) Außenabmessungen des Querschnitts des stabförmigen Elements 140. Insbesondere soll der Durchmesser des stabförmigen Elementes 140, wenn dieses einen kreisförmigen Querschnitt aufweist, einen kleineren Wert aufweisen, als die kleinste Innenseitenlänge des Durchgangslochs 165 der Verbindungsbuchsen 160 oder als der Durchmesser am Innenumfang des Durchgangslochs 165 der Verbindungsbuchsen 160. Weiter soll die Abmessung der größten Seitenlänge des stabförmigen Elementes 140, wenn dieses einen rechteckigen (oder quadratischen) Querschnitt aufweist, einen kleineren Wert aufweisen, als die kleinste Innenseitenlänge des Durchgangslochs 165 der Verbindungsbuchsen 160 oder als der Durchmesser am Innenumfang des Durchgangslochs 165 der Verbindungsbuchsen 160.

Jede Verbindungsbuchse 160 ist in einer Einbuchtung 124 an der Fläche 124a, welche parallel zu der Anlagefläche 123 verläuft, mittels geeigneter Befestigungsmittel oder -methoden angebracht und ist somit einem Schalenelement 120 zugeordnet. Selbstverständlich können die Verbindungsbuchsen 160 auch mit einer der oder beiden Seitenflächen 124b verbunden sein oder integral mit der jeweiligen Einbuchtung 124 ausgebildet sein. Sollte die Einbuchtung 124 in der Form eines Kreises ausgebildet sein, ist die Verbindungsbuchse 160 jeweils an der gesamten Einbuchtung 124 befestigt.

In jedem Hohlraum 125 ist eine Mehrzahl von Verbindungsbuchsen 160 angeordnet, wobei eine Hälfte der Mehrzahl von Verbindungsbuchsen 160 an dem einen Schalenelement 120 und die andere Hälfte der Mehrzahl von Verbindungsbuchsen 160 an dem anderen Schalenelement 120 befestigt ist. Bevorzugt sind die Verbindungsbuchsen 160 in einer alternierenden Reihenfolge an dem einen Schalenelement 120 und dem anderen Schalenelement 120 befestigt. Die Befestigung der Verbindungsbuchsen 160 erfolgt auf eine solche Weise, dass diese, wenn die Anlageflächen der Schalenelemente 120 aneinander anliegen, derart ineinander eingreifen, dass sich die Durchgangslöcher 165 der Verbindungsbuchsen 160 in Längsrichtung der Spanngliedschutzvorrichtung 100 vollständig überlappen und die Stirnflächen 162 der Verbindungsbuchsen 160 aneinander anliegen. Alternativ können die Verbindungsbuchsen auch in einer anderen Reihenfolge an den Schalenelementen befestigt und diesen zugeordnet sein, insoweit eine Verbindung so angeordneter Verbindungsbuchsen 160 mittels des stabförmigen Elements 140 zu einem formschlüssigen Verbund der jeweiligen beiden Schalenelementen 120 führt. Es kann zum Beispiel daran gedacht werden, zwei Verbindungsbuchsen 160 an dem einen Schalenelement 120 anzubringen und, in Längsrichtung der Spanngliedschutzvorrichtung 100, folgend eine Verbindungsbuchse 160 an dem anderen Schalenelement 120 anzubringen usw.

Des Weiteren können alternativ auch gewisse Abstände zwischen Stirnflächen 162 der Verbindungsbuchsen 160 vorhanden sein, solange eine Verbindung mittels des stabförmigen Elements 140 so angeordneter Verbindungsbuchsen 160 zu einem formschlüssigen Verbund der jeweiligen beiden Schalenelementen 120 führt.

Die Verbindungsbuchsen 160 sind aus einem metallischen Material gefertigt, können aber auch aus jedem anderen geeigneten Material gebildet sein. Um den Herstellungsprozess zu vereinfachen, können die Verbindungsbuchsen 160 gleich lang ausgebildet sein. Die in Längserstreckungsrichtung des Spannglieds 110 endständigen Verbindungsbuchsen 160 können jedoch auch eine abweichende Länge aufweisen. Alternativ können die Verbindungsbuchsen 160 unterschiedlich lang ausgebildet sein.

Zur Verbindung der Schalenelemente 120 werden diese an den Anlageflächen 123 in Kontakt gebracht, so dass die Verbindungsbuchsen ineinander eingreifen und die Durchgangslöcher 165 miteinander fluchten. Folgend werden die stabförmigen Elemente 140 in die Durchgangslöcher 165 der Verbindungsbuchsen 160 eingeführt, bis sie sich vollständig in den Verbindungsbuchsen 160 befinden.

Sodann kann zum Schutz vor selbsttätigem Herausfallen der stabförmigen Elemente 140 ein Bodenblech (nicht gezeigt) an dem unteren Ende der Spanngliedschutzvorrichtung 100 angebracht werden. Im montierten Zustand kann darüber hinaus ein Deckelblech (nicht gezeigt) an dem oberen Ende der Spanngliedschutzvorrichtung 100 angebracht werden.

Des Weiteren kann zum Schutz der Spanngliedschutzvorrichtung 100 ein Gehäuse (nicht gezeigt) über derselben angebracht werden. Das Bodenblech, das Deckelblech sowie das Gehäuse können aus Stahlblech gebildet sein. Alternativ kann das Gehäuse aus jedem anderen geeigneten Material gebildet sein.

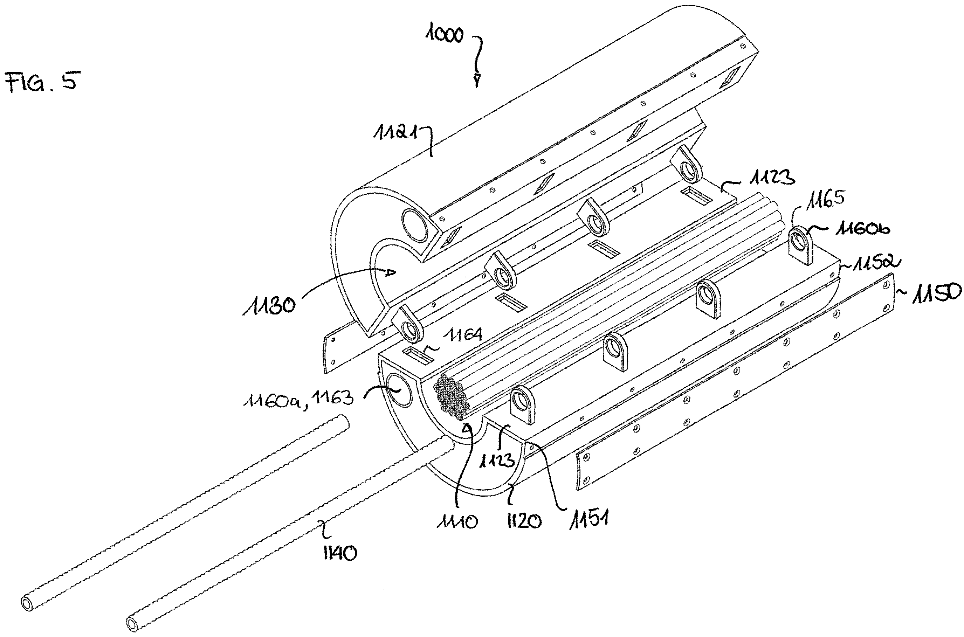

Es kann auch in einer alternativen, zweiten Ausführungsform daran gedacht werden, einen Teil 1160a der Mehrzahl der Verbindungsbuchsen 1160 integral mit dem Schalenelement 1120 auszubilden, wie es in FIG. 5 gezeigt ist. In Bezug auf diese Ausführungsform werden die Bezugszeichen entsprechend um die Ziffer 1000 erhöht verwendet und es werden nur die Unterschiede zu der ersten Ausführungsform benannt. Hierbei sind die Verbindungsbuchsen 1160a als kreisförmiges Durchgangsloch 1163 in dem Schalenelement 1120 ausgebildet. Dieses Durchgangsloch 1163 reicht von der unteren Endseite zu der oberen Endseite des Schalenelements 1120. Zudem weist das Schalenelement an der einen Anlagefläche 1123, unter welcher sich das Durchgangsloch 1163 befindet, Aussparungen 1164 auf.

Des Weiteren weisen in dieser Ausführungsform die Schalenelemente 1120 an der anderen Anlagefläche 1123 von dieser abstehende Verbindungsbuchsen 1160b auf, welche dort durch Schweißen, Löten, Kleben oder eine alternative Befestigungsmethode befestigt sind. Diese Verbindungsbuchsen 1160b sind im zu der Anlagefläche 1123 entfernteren Querschnittsabschnitt kreisrund ausgebildet, wobei in den Verbindungsbuchsen 1160b zwischen der Anlagefläche 1123 und dem kreisrunden Abschnitt ein Steg angeordnet ist. In dem kreisrunden Abschnitt der Verbindungsbuchsen 1160b ist ein Durchgangsloch 1165 angeordnet, durch das schlussendlich - nach dem Zusammenfügen der Anlageflächen 1123 - das stabförmige Element 1140 geführt wird.

Die Aussparungen 1164 sind so ausgebildet und angeordnet, dass beim Zusammenfügen der Schalenelemente 1120 die Verbindungsbuchsen 1160b durch die Aussparungen 1164 durchtreten können. Wenn die Anlageflächen 1123 von zwei Schalenelementen 1120 aneinander anliegen, ist die jeweilige Verbindungsbuchse 1160b dann vollständig in der Aussparung 1164 und in dem darunter liegenden Durchgangsloch 1163 aufgenommen. Hierzu sollten die Aussparungen 1164 in der Längserstreckung der jeweiligen Anlagefläche 1123 in gleichen Abständen von dem unteren (oder oberen) Endabschnitt des Schalenelements 1120 und von der Außenumfangsfläche 1121 wie die Verbindungsbuchsen 1160b angeordnet sein.

Daher sollte jede Verbindungsbuchse 1160b derart ausgestaltet sein, dass der Radius des kreisrunden Abschnitts der Verbindungsbuchse 1160b im Wesentlichen dem Radius des Durchgangslochs 1163 entspricht und die Längenausdehnung maximal der größten Abmessung zwischen der Anlagefläche 1123 und der gegenüber liegenden Innenumfangfläche der des Durchgangslochs 1163 entspricht.

Des Weiteren ist die Erstreckung in Längsrichtung der Schalenelemente 1120 der Verbindungsbuchsen 1160b im Vergleich zu deren Höhe klein.

Die Verbindungsbuchsen 1160b sind in gleichen Abständen an den Anlageflächen 1123 angeordnet. "Gleich" bedeutet in diesem Zusammenhang, dass die Verbindungsbuchsen 1160b in der Längserstreckung der jeweiligen Anlagefläche 1123 in gleichen Abständen angeordnet sind. Es bedeutet aber auch, dass die Verbindungsbuchsen 1160b an einer Anlagefläche 1123 und an einer anderen Anlagefläche 1123 an jeweils denselben Abständen zu dem Bodenblech und Deckelblech befestigt sind.

Die Verbindungsbuchsen 1160b können an ihren Rändern mit Abfasungen versehen sein. Auch die Aussparungen 1164 können an der der Anlagefläche 1123 zugewandten Seite mit Abfasungen versehen sein.

Für diese Ausführungsform sollte das Schalenelement 1120 als Hohlkörper ausgebildet sein, andernfalls sollten die Aussparungen 1164 einen Durchtritt zu dem Durchgangsloch 1163 aufweisen, der ein Durchtreten der Verbindungsbuchsen 1160b ermöglicht.

Das/die Abdeckblech(e) 1150 kann/können in dieser Ausführungsform in einer Aussparung 1152 der Außenumfangsfläche 1121 angebracht sein. Diese Aussparung erstreckt sich unterhalb und oberhalb der Stoßstelle 1151.

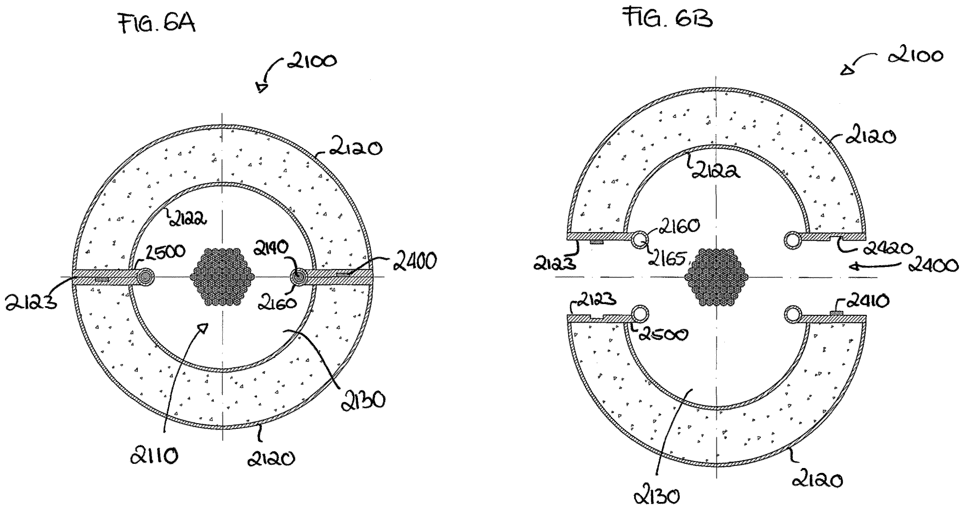

In einer dritten Ausführungsform werden die Bezugszeichen entsprechend um die Ziffer 2000 erhöht verwendet und es werden ebenfalls nur die Unterschiede zu der ersten Ausführungsform beschrieben. In dieser dritten Ausführungsform einer Spanngliedschutzvorrichtung 2100 sind die Verbindungsbuchsen 2160 in dem Hohlraum 2130 angeordnet. Vorzugsweise können die Verbindungsbuchsen 2160, wie es in FIG. 6 gezeigt ist, mit einem zwischengeschalteten Steg 2500 an einer Innenumfangsfläche 2122 der beiden Schalenelemente 2120 angeordnet sein. Alternativ können die Verbindungsbuchsen 2160 unmittelbar an die Innenumfangsfläche 2122 der beiden Schalenelemente 2120 angrenzend angeordnet sein.

Die Verbindungsbuchsen 2160 sind in der FIG. 6 kreisrund mit einem Durchgangsloch 2165 ausgebildet; sie können selbstverständlich aber auch in jeder anderen Form, insbesondere rechteckig oder quadratisch ausgebildet sein.

In der FIG. 6A sind die Schalenelemente 2120 in einem zusammengefügten Zustand gezeigt, wobei die stabförmigen Elemente 2140 in die Verbindungsbuchsen 2160 eingeführt sind.

Optional kann in dieser dritten Ausführungsform eine Kopplungsvorrichtung 2400 in den Anlageflächen 2123 von wenigstens zwei Schalenelementen 2120, welche in dem den Hohlraum 2130 bildenden Zustand aneinander anliegen, angeordnet sein, welche die Anlageflächen 2123 der zwei Schalenelemente 2120 aneinander koppelt. Diese Kopplungsvorrichtung 2400 kann einen Vorsprung 2410 auf der einen und eine Vertiefung 2420 in der jeweils anderen der beiden in dem den Hohlraum 2130 bildenden Zustand aneinander anliegenden Anlageflächen 2123 umfassen. Der Vorsprung 2120 und die Vertiefung 2420 sind so ausgebildet, dass sie in dem den Hohlraum 2130 bildenden Zustand der Schalenelemente 2120 ineinander eingreifen.

Die Kopplungsvorrichtung 2400 kann auf der gesamten Länge der Anlageflächen 2123 angeordnet sein, sodass sie hierbei eine durchlaufende Leiste bildet. Alternativ können mehrere Kopplungsvorrichtungen 2400 über die gesamte Länge der Anlageflächen 2123 angeordnet sein, sodass die einzelnen Kopplungsvorrichtungen 2400 punktuell wirken. Hierbei können die Kopplungsvorrichtungen 2400 gleiche oder alternativ unterschiedliche Längen aufweisen. Zwischen den Kopplungsvorrichtungen 2400 können gleich große oder unterschiedlich große Abstände sein.

## Patentansprüche

1. Spanngliedschutzvorrichtung (100; 1100; 2100), welche dazu ausgelegt und bestimmt ist, ein zwischen zwei Abschnitten eines Bauwerks angeordnetes Spannglied (110; 1110; 2110) zu schützen, umfassend:
• zwei oder mehr in Umfangsrichtung um das Spannglied (110; 1110; 2110) anordenbare Schalenelemente (120; 1120; 2120), welche gemeinsam einen zur Aufnahme des Spannglieds (110; 1110; 2110) bestimmten Hohlraum (130; 1130; 2130) umgeben, und
• Verbindungsmittel, mittels derer die Schalenelemente (120; 1120; 2120) lösbar miteinander verbindbar sind,
wobei die Verbindungsmittel zum Verbinden von wenigstens zwei Schalenelementen (120; 1120; 2120), welche in dem den Hohlraum (130; 1130; 2130) bildenden Zustand mittels zweier Anlageflächen (123; 1123; 2123) aneinander anliegen, eine Mehrzahl von Verbindungsbuchsen (160; 1160, 1160a, 1160b; 2160) umfassen, von denen jede einem der beiden Schalenelementen (120; 1120; 2120) zugeordnet ist, wobei die Verbindungsbuchsen (160; 1160, 1160a, 1160b; 2160) derart ausgebildet und derart an den Schalenelementen (120; 1120; 2120) angeordnet sind, dass sie in dem den Hohlraum (130; 1130; 2130) bildenden Zustand derart ineinandergreifen, dass sich ihre Durchgangslöcher (165; 1165; 2165) in Längsrichtung der Spanngliedschutzvorrichtung (100; 1100; 2100) gesehen erst dann im Wesentlichen vollständig überlappen, wenn die beiden Schalenelemente (120; 1120; 2120) mit ihren Anlageflächen (123; 1123; 2123) aneinander anliegen, und dass die Verbindungsmittel ferner ein stabförmiges Element (140; 1140; 2140) umfassen, welches dazu ausgebildet und bestimmt ist, durch die Durchgangslöcher (165; 1165; 2165) der ineinandergreifenden Verbindungsbuchsen (160; 1160, 1160a, 1160b; 2160) hindurchgeführt zu werden,
**dadurch gekennzeichnet, dass** die Verbindungsbuchsen (2160) in dem Hohlraum (2130) angeordnet sind.

2. Spanngliedschutzvorrichtung (100; 1100; 2100) nach Anspruch 1, **dadurch gekennzeichnet, dass** ein Abdeckblech (150; 1150) vorgesehen ist, welches die Stoßstelle (151; 1151) zwischen den beiden aneinander anliegenden Schalenelementen (120; 1120; 2120) überdeckt und an wenigstens einem der beiden Schalenelemente (120; 1120; 2120) befestigt ist.

3. Spanngliedschutzvorrichtung (100; 1100; 2100) nach Anspruch 2, **dadurch gekennzeichnet, dass** wenigstens ein weiteres Abdeckblech (150; 1150) vorgesehen ist, welches an der äußeren Oberfläche (121; 1121) eines der Schalenelemente (120; 1120; 2120) befestigt ist.

4. Spanngliedschutzvorrichtung (100; 1100; 2100) nach einem der Ansprüche 1 bis 3,
**dadurch gekennzeichnet, dass** die Länge des stabförmigen Elements (140; 1140; 2140) im Wesentlichen gleich der Länge der Spanngliedschutzvorrichtung (100; 1100; 2100) ist.

5. Spanngliedschutzvorrichtung (100; 2100) nach einem der Ansprüche 1 bis 4,
**dadurch gekennzeichnet, dass** die dem einen Schalenelement (120; 2120) zugeordneten Verbindungsbuchsen (160; 2160) und die dem jeweils anderen Schalenelement (120; 2120) zugeordneten Verbindungsbuchsen (160; 2160) in alternierender Reihenfolge ineinandergreifen.

6. Spanngliedschutzvorrichtung (100; 2100) nach einem der Ansprüche 1 bis 5,
**dadurch gekennzeichnet, dass** die Länge der den beiden Schalenelementen (120; 2120) zugeordneten Verbindungsbuchsen (160; 2160) gleich bemessen ist.

7. Spanngliedschutzvorrichtung (100; 2100) nach einem der Ansprüche 1 bis 6,
**dadurch gekennzeichnet, dass** die Verbindungsbuchsen (160; 2160) einen rechteckigen, vorzugsweise quadratischen, Querschnitt aufweisen.

8. Spanngliedschutzvorrichtung (100; 1100; 2100) nach einem der Ansprüche 1 bis 7,
**dadurch gekennzeichnet, dass** das stabförmige Element (140; 1140; 2140) einen kreisförmigen Querschnitt aufweist.

9. Spanngliedschutzvorrichtung (100; 1100; 2100) nach einem der Ansprüche 1 bis 8,
**dadurch gekennzeichnet, dass** der Querschnitt der Verbindungsbuchsen (160; 1160, 1160a, 1160b; 2160) Innenabmessungen aufweist, die größer sind als die Außenabmessungen des Querschnitts des stabförmigen Elements (140; 1140; 2140).

10. Spanngliedschutzvorrichtung (2100) nach einem der Ansprüche 1 bis 9,
**dadurch gekennzeichnet, dass** in den Anlageflächen (2123) von wenigstens zwei Schalenelementen (2120), welche in dem den Hohlraum (2130) bildenden Zustand aneinander anliegen, eine Kopplungsvorrichtung (2400) angeordnet ist, welche die Anlageflächen (2123) der wenigstens zwei Schalenelemente (2120) aneinander koppelt, wobei die Kopplungsvorrichtung (2400) eine formschlüssige Kopplung zwischen ineinander eingreifenden Vorsprüngen (2410) und Vertiefungen (2420) umfasst.

11. Spanngliedschutzvorrichtung (100; 1100; 2100) nach einem der Ansprüche 1 bis 10,
**dadurch gekennzeichnet, dass** wenigstens ein Schalenelement (120; 1120; 2120) ein Gehäuse aufweist, vorzugsweise alle Schalenelemente (120; 1120; 2120) ein Gehäuse aufweisen, dessen Innenraum die Schutzvorrichtung (100; 1100; 2100) aufnimmt.

## Claims

1. Tension member protection system (100; 1100; 2100), which is designed and intended to protect a tension member (110; 1110; 2110) arranged between two sections of a structure, comprising:
- two or more shell elements (120; 1120; 2120) arranged circumferentially around the tension member (110; 1110; 2110) which together surround a cavity (130; 1130; 2130) intended to receive the tension member (110; 1110; 2110), and
- joining means whereby the shell elements (120; 1120; 2120) can be detachably connected to one another,
wherein the joining means for joining at least two shell elements (120; 1120; 2120), which in the cavity (130; 1130; 2130) forming state lie with their two contact surfaces (123; 1123; 2123) against each other, comprise a plurality of joining sleeves (160; 1160, 1160a, 1160b; 2160), each of which is associated with one of the two shell elements (120; 1120; 2120), the joining sleeves (160; 1160, 1160a, 1160b; 2160) being designed and being arranged on the shell elements (120; 1120; 2120) in such a way that, in the cavity (130; 1130; 2130) forming state, they interlock so that their through-holes (165; 1165; 2165) in the longitudinal direction of the tension member protection system (100; 1100; 2100) essentially only overlap completely when the two shell elements (120; 1120; 2120) lie with their contact surfaces (123; 1123; 2123) against each other, and in that the joining means further comprise a rod-shaped element (140; 1140; 2140) designed and intended to be passed through the through-holes (165; 1165; 2165) of the interlocking joining sleeves (160; 1160, 1160a, 1160b; 2160), **characterised in that** the joining sleeves (2160) are arranged in the cavity (2130).

2. Tension member protection system (100; 1100; 2100) according to claim 1,
**characterised in that** a cover plate (150; 1150) is provided which covers the joint (151; 1151) between the two shell elements (120; 1120; 2120) lying against each other and is fastened to at least one of the two shell elements (120; 1120; 2120).

3. Tension member protection system (100; 1100; 2100) according to claim 2, **characterised in that** at least one further cover plate (150; 1150) is provided which is fastened to the outer surface (121; 1121) of one of the shell elements (120; 1120; 2120).

4. Tension member protection system (100; 1100; 2100) according to one of claims 1 to 3,
**characterised in that** the length of the rod-shaped element (140; 1140, 2140) is essentially equal to the length of the tension member protection system (100; 1100; 2100).

5. Tension member protection system (100; 2100) according to one of claims 1 to 4, **characterised in that** the joining sleeves (160; 2160) assigned to one shell element (120; 2120) and the joining sleeves (160; 2160) assigned to the other shell element (120; 2120) interlock in alternating sequence.

6. Tension member protection system (100; 2100) according to one of claims 1 to 5, **characterised in that** the joining sleeves (160; 2160) assigned to the two shell elements (120; 2120) are of the same length.

7. Tension member protection system (100; 2100) according to one of claims 1 to 6, **characterised in that** the joining sleeves (160; 2160) have a rectangular, preferably square, cross-section.

8. Tension member protection system (100; 1100; 2100) according to one of claims 1 to 7,
**characterised in that** the rod-shaped element (140; 1140; 2140) has a circular cross-section.

9. Tension member protection system (100; 1100; 2100) according to one of claims 1 to 8,
**characterised in that** the cross-section of the joining sleeves (160; 1160, 1160a, 1160b; 2160) has internal dimensions which are larger than the external dimensions of the cross-section of the rod-shaped element (140; 1140; 2140).

10. Tension member protection system (2100) according to one of claims 1 to 9, **characterised in that** a coupling device (2400) is arranged in the contact surfaces (2123) of at least two shell elements (2120), which lie against each another in the cavity (2130) forming state, which couples the contact surfaces (2123) of at least two shell elements (2120) with each other, with the coupling device (2400) comprising a positive coupling between projections (2410) and depressions (2420) that engage with each other.

11. Tension member protection system (100; 1100; 2100) according to one of claims 1 to 10,
**characterised in that** at least one shell element (120; 1120; 2120) has a housing, and preferably all shell elements (120; 1120; 2120) have a housing, whose interior accommodates the protection system (100; 1100; 2100).

## Revendications

1. Dispositif de protection (100 ; 1100 ; 2100) d'un élément de tension, qui est adapté et destiné à protéger un élément de tension (110 ; 1110 ; 2110) disposé entre deux sections d'un ouvrage, comprenant :
• deux ou plusieurs éléments de coque (120 ; 1120 ; 2120) susceptibles d'être disposés dans le sens circonférentiel autour de l'élément de tension (110 ; 1110 ; 2110), qui entourent conjointement une cavité (130 ; 1130 ; 2130) destinée à recevoir l'élément de tension (110 ; 1110 ; 2110), et
• des moyens de liaison permettant de relier de façon amovible les éléments de coque (120 ; 1120 ; 2120) les uns aux autres,
dans lequel
les moyens de liaison destinés à relier au moins deux éléments de coque (120 ; 1120 ; 2120) qui, dans l'état formant la cavité (130 ; 1130 ; 2130), s'appliquent l'un contre l'autre au moyen de deux surfaces d'appui (123 ; 1123 ; 2123), comprennent une pluralité de douilles de liaison (160 ; 1160, 1160a, 1160b ; 2160) dont chacune est associée à l'un des deux éléments de coque (120 ; 1120 ; 2120), les douilles de liaison (160 ; 1160, 1160a, 1160b ; 2160) étant conçues et disposées sur les éléments de coque (120 ; 1120 ; 2120) de telle sorte que, dans l'état formant la cavité (130 ; 1130 ; 2130), elles s'engagent mutuellement de telle sorte que leurs trous de passage (165 ; 1165 ; 2165), vus dans le sens longitudinal du dispositif (100 ; 1100; 2100) de protection de l'élément de tension, ne se chevauchent sensiblement complètement que lorsque les deux éléments de coque (120 ; 1120 ; 2120) s'appliquent l'un contre l'autre par leurs surfaces d'appui (123 ; 1123 ; 2123), et
les moyens de liaison comprennent en outre un élément en forme de tige (140 ; 1140 ; 2140) qui est adapté et destiné à être passé à travers les trous de passage (165 ; 1165 ; 2165) des douilles de liaison (160 ; 1160, 1160a, 1160b ; 2160) qui s'engagent mutuellement,
**caractérisé en ce que**
les douilles de liaison (2160) sont disposées dans la cavité (2130).

2. Dispositif (100 ; 1100 ; 2100) de protection d'un élément de tension selon la revendication 1,
**caractérisé en ce qu'**il est prévu une tôle de recouvrement (150 ; 1150) qui recouvre l'emplacement de jonction (151; 1151) entre les deux éléments de coque (120 ; 1120 ; 2120) appliqués l'un contre l'autre et qui est fixée à l'un au moins des deux éléments de coque (120 ; 1120 ; 2120).

3. Dispositif (100 ; 1100 ; 2100) de protection d'un élément de tension selon la revendication 2,
**caractérisé en ce qu'**il est prévu au moins une autre tôle de recouvrement (150 ; 1150) qui est fixée à la surface extérieure (121; 1121) de l'un des éléments de coque (120 ; 1120 ; 2120).

4. Dispositif (100 ; 1100 ; 2100) de protection d'un élément de tension selon l'une des revendications 1 à 3,
**caractérisé en ce que** la longueur de l'élément en forme de tige (140 ; 1140 ; 2140) est sensiblement égale à la longueur du dispositif (100 ; 1100 ; 2100) de protection d'un élément de tension.

5. Dispositif (100 ; 2100) de protection d'un élément de tension selon l'une des revendications 1 à 4,
**caractérisé en ce que** les douilles de liaison (160 ; 2160) associées à l'un des éléments de coque (120 ; 2120) et les douilles de liaison (160 ; 2160) associées à l'autre élément de coque respectif (120 ; 2120) s'engagent mutuellement dans un ordre alterné.

6. Dispositif (100 ; 2100) de protection d'un élément de tension selon l'une des revendications 1 à 5,
**caractérisé en ce que** la longueur des douilles de liaison (160 ; 2160) associées aux deux éléments de coque (120 ; 2120) est identique.

7. Dispositif (100 ; 2100) de protection d'un élément de tension selon l'une des revendications 1 à 6,
**caractérisé en ce que** les douilles de liaison (160 ; 2160) présentent une section transversale rectangulaire, de préférence carrée.

8. Dispositif (100 ; 1100 ; 2100) de protection d'un élément de tension selon l'une des revendications 1 à 7,
**caractérisé en ce que** l'élément en forme de tige (140 ; 1140 ; 2140) présente une section transversale circulaire.

9. Dispositif (100 ; 1100 ; 2100) de protection d'un élément de tension selon l'une des revendications 1 à 8,
**caractérisé en ce que** la section transversale des douilles de liaison (160 ; 1160, 1160a, 1160b ; 2160) présente des dimensions internes supérieures aux dimensions externes de la section transversale de l'élément en forme de tige (140 ; 1140 ; 2140).

10. Dispositif (2100) de protection d'un élément de tension selon l'une des revendications 1 à 9,
**caractérisé en ce qu'**un dispositif de couplage (2400) est disposé dans les surfaces d'appui (2123) d'au moins deux éléments de coque (2120) qui s'appliquent l'un contre l'autre dans l'état formant la cavité (2130), qui couple l'une à l'autre les surfaces d'appui (2123) desdits au moins deux éléments de coque (2120), le dispositif de couplage (2400) comprenant un couplage par complémentarité de forme entre des saillies (2410) et des creux (2420) qui s'engagent mutuellement.

11. Dispositif (100 ; 1100 ; 2100) de protection d'un élément de tension selon l'une des revendications 1 à 10,
**caractérisé en ce qu'**au moins un élément de coque (120 ; 1120 ; 2120) présente un boîtier, de préférence tous les éléments de coque (120 ; 1120 ; 2120) présentent un boîtier dont l'espace intérieur reçoit le dispositif de protection (100 ; 1100 ; 2100).
